# EUROPÄISCHE PATENTSCHRIFT

(11) **EP 2 698 038 B1**
(45) Veröffentlichungstag und Bekanntmachung des Hinweises auf die Patenterteilung: **09.11.2016**
(21) Anmeldenummer: 12717622.0
(22) Anmeldetag: 27.03.2012
(51) Int. Cl.: H05B 3/84

(54) **ELEKTRISCH BEHEIZBARER TRÄGER UND FLÄCHENHEIZKÖRPER, SOWIE VERFAHREN ZU DESSEN HERSTELLUNG**
ELECTRICALLY HEATABLE CARRIER AND PANEL RADIATOR, AND METHOD FOR THE PRODUCTION THEREOF
SUPPORT POUVANT ÊTRE CHAUFFÉ ÉLECTRIQUEMENT ET ÉLÉMENT CHAUFFANT PLAN, AINSI QUE LEURS PROCÉDÉS DE FABRICATION

(30) Priorität: 12.04.2011 EP 11162134; 12.04.2011 EP 11162131
(43) Veröffentlichungstag der Anmeldung: 19.02.2014
(73) Patentinhaber: Saint-Gobain Glass France, 92400 Courbevoie (FR)
(72) Erfinder: LISINSKI, Susanne, 50739 Köln (DE); PHAN, Dang Cuong, 52062 Aachen (DE); SCHALL, Günther, 52372 Kreuzau (DE); KLEIN, Marcel, 52499 Baesweiler (DE); VELDEN, Sabine, 52459 Inden (DE)
(74) Vertreter: Gebauer, Dieter Edmund
(86) Internationale Anmeldenummer: PCT/EP2012/055439
(87) Internationale Veröffentlichungsnummer: WO 2012/139884

(56) Entgegenhaltungen:
- WO-A1-2006/010698
- DE-A1- 10 208 552
- DE-A1-102007 004 953

## Beschreibung

Flächenheizkörper mit einem Substrat und einer elektrischen Heizschicht sind als solche wohlbekannt und bereits vielfach in der Patentliteratur beschrieben worden. Lediglich beispielhaft sei in diesem Zusammenhang auf die deutschen Offenlegungsschriften DE 102008018147 A1 und DE 102008029986 A1 verwiesen. In Kraftfahrzeugen werden sie häufig als Windschutzscheiben eingesetzt, da das zentrale Sichtfeld von Windschutzscheiben aufgrund gesetzlicher Vorgaben keine wesentlichen Sichteinschränkungen aufweisen darf.

Aus der industriellen Serienfertigung von Flächenheizkörpern ist die Strukturierung der Heizschicht durch Trennlinien zur Formung eines in der Regel gewundenen Strompfads bekannt. Dies hat den Vorteil, dass der elektrische Widerstand erhöht und der Strompfad durch relativ kleine Anschlusselektroden kontaktiert werden kann. In der Patentliteratur ist ein solcher Flächenheizkörper beispielsweise in der deutschen Offenlegungsschrift DE 19860870 A1 beschrieben.

Bei solchen Flächenheizkörpern tritt das Problem auf, dass im Bereich einer Krümmung des Strompfads die Stromverteilung inhomogen wird und lokale Wärmezentren ("Hot Spots") entstehen können. Diese Hot Spots verursachen eine ungleichmäßige Wärmeverteilung im Flächenheizkörper und können aufgrund einer lokalen Überhitzung zu einer Beeinträchtigung und gegebenenfalls sogar Schädigung der Heizschicht oder des Substrats führen. Darüber hinaus kann bei transparenten Scheiben an den Überhitzungspunkten die optische Wahrnehmung durch die Scheibe beeinträchtigt sein.

Das Dokument DE 102 08 552 beschreibt einen Flächenheizkörper mit einem Substrat und einer aus einem elektrisch leitfähigen Material zum Heizen des Substrats bestehenden Heizschicht, die mittels erster Trennzonen in getrennten, benachbarten, elektrisch miteinander verbundenen Heizzonen unterteilt ist, und wobei der an den freien Zonenenden der ersten Trennzonen seine Verlaufsrichtung ändernde Strompfad zumindest abschnittsweise in eine Mehrzahl elektrisch paralleler Teilstrompfade mittels einer oder mehreren zweiten Trennzonen aufgeteilt ist.

Eine Lösung dieses Problems ist in der US-amerikanischen Patentanmeldung US 2005/221062 A1 offenbart. Demnach sind an den freien Enden der Trennlinien bogenförmig gekrümmte Hilfslinien vorgesehen, durch die der Strompfad in eine Mehrzahl paralleler Teilstrompfade aufgeteilt wird.

Demgegenüber besteht die Aufgabe der vorliegenden Erfindung darin, dem Auftreten lokaler Wärmezentren entgegen zu wirken bzw. solche zu verhindern. Diese und weitere Aufgaben werden nach dem Vorschlag der Erfindung durch einen Träger, einen damit gefertigten Flächenheizkörper, sowie ein Verfahren zur Herstellung eines solchen Trägers mit den Merkmalen der nebengeordneten Patentansprüche gelöst. Vorteilhafte Ausgestaltungen der Erfindung sind durch die Merkmale der Unteransprüche angegeben.

Erfindungsgemäß ist ein Träger, insbesondere eine Kunststoff-Folie, gezeigt, bei dem auf zumindest einen Teil einer Träger- bzw. Folienfläche eine elektrische Heizschicht zum Heizen des Trägers aufgebracht ist. Der Träger bzw. Folie kann aus jedem für die Anwendung geeigneten Kunststoff bestehen, beispielsweise aus Polyamid (PA), Polyurethan (PU), Polyvinylchlorid (PVC), Polycarbonat (PC), Polyester (PE), Polyvinylbutyral (PVB) oder Polyethylenterephthalat (PET). Er verfügt zudem über mindestens zwei zum Anschluss an eine Spannungsquelle vorgesehene Elektroden, die mit der Heizschicht so verbunden sind, dass zwischen den Elektroden ein (Haupt-)Strompfad für einen Heizstrom geformt ist. Die Heizschicht ist durch eine oder mehrere erste Trennzonen abschnittsweise elektrisch unterteilt, wobei jede erste Trennzone über mindestens ein innerhalb der Heizschicht frei endendes ("freies") Zonenende verfügt. Die eine oder mehreren ersten Trennzonen sind so ausgebildet, dass der (Haupt-)Strompfad an den freien Zonenenden jeweils seine Verlaufsrichtung ändert, beispielsweise um 180°. Vorzugsweise, jedoch nicht zwingend, sind die ersten Trennzonen als Trennlinien linienförmig, insbesondere geradlinig, ausgebildet. Weiterhin sind in der Heizschicht eine oder mehrere zweite Trennzonen ausgebildet, welche die Heizschicht jeweils abschnittsweise elektrisch unterteilen und so ausgebildet sind, dass der an den freien Zonenenden seine Verlaufsrichtung ändernde (Haupt-)Strompfad zumindest abschnittsweise in eine Mehrzahl elektrisch paralleler Teilstrompfade aufgeteilt wird. Der (Haupt-)Strompfad wird somit an den freien Zonenenden zumindest in einem seine Verlaufsrichtung ändernden Strompfadabschnitt in Teilstrompfade aufgeteilt. Somit kann der Heizstrom zumindest abschnittsweise in Teilstrompfaden um das freie Zonenende herum geführt werden. Hierbei sind eine oder mehrere zweite Trennzonen jeweils dem selben freien Zonenende einer ersten Trennzone zugeordnet, wobei zu diesem Zweck eine oder mehrere zweite Trennzonen jeweils benachbart zu bzw. angrenzend an das zugeordnete freie Zonenende angeordnet sind.

Erfindungsgemäß sind einem freien Zonenende einer vorzugsweise geradlinigen ersten Trennzone eine oder mehrere zweite Trennzonen zugeordnet, die jeweils in einer fluchtenden Verlängerung der ersten Trennzone angeordnet sind. Vorzugsweise, jedoch nicht zwingend, sind die zweiten Trennzonen als Trennlinien linienförmig, insbesondere geradlinig, ausgebildet. Durch diese Maßnahme können die zweiten Trennzonen in besonders vorteilhafter Weise in einem gleichen Verfahrensschritt wie die ersten Trennzonen hergestellt werden, wodurch sich die Herstellung des Trägers in der Serienfertigung erheblich vereinfacht. Wird beispielsweise ein die Heizschicht entfernender Laser zur Herstellung der ersten und zweiten Trennzonen eingesetzt, ist es lediglich erforderlich den Laser beispielsweise geradlinig über die Heizschicht zu führen und die elektrische Leistung zum Speisen des Lasers entsprechend zu variieren, so dass die erste Trennzone und die zugehörigen zweiten Trennzonen in einer selben Translationsbewegung des Laserkopfes hergestellt werden können.

Durch die Aufteilung des (Haupt-)Strompfads in eine Mehrzahl Teilstrompfade kann in vorteilhafter Weise eine räumliche Homogenisierung der Stromdichte im Bereich der Verlaufsrichtungsänderung des (Haupt-)Strompfads erreicht werden, um auf diese Weise dem Entstehen lokaler Wärmezentren bzw. Überhitzungspunkten entgegen zu wirken.

Besonders vorteilhaft ist es, wenn die Trennzonen einen Zwischenabstand haben, der sich zum freien Zonenende hin verkleinert. Durch diese Maßnahme kann eine besonders effektive Homogenisierung des Stromflusses im gekrümmten Strompfad erreicht werden, um die Wärmeverteilung zu homogenisieren.

Bei einer weiteren vorteilhaften Ausführungsform des Trägers sind wenigstens einem (selben) freien Zonenende eine oder mehrere zweite Trennzonen zugeordnet, wobei die zweiten Trennzonen so ausgebildet sind, dass die Teilstrompfade am freien Zonenende einen zumindest annähernd gleichen elektrischen Widerstand haben. Durch diese Maßnahme kann in vorteilhafter Weise erreicht werden, dass der Strom gleichmäßig auf die Teilstrompfade aufgeteilt wird, so dass sich eine besonders homogene Stromdichte- und Wärmeverteilung im Träger ergibt.

Bei einer weiteren vorteilhaften Ausführungsform des Trägers schließt sich an das freie Zonenende der wenigstens einen ersten Trennzone, welcher eine oder mehrere geradlinige zweite Trennzonen zugeordnet sind, eine Übergangszone an, in der die elektrische Leitfähigkeit der Heizschicht zum freien Zonenende hin abnimmt, d.h. bis auf Null abnimmt. Vorzugsweise, jedoch nicht zwingend, ist die Übergangszone so ausgebildet, dass die elektrische Leitfähigkeit der Heizschicht zum freien Zonenende hin kontinuierlich, insbesondere linear, abnimmt. Vorzugsweise, jedoch nicht zwingend, sind die Übergangszonen jeweils linienförmig, insbesondere geradlinig, ausgebildet. Durch diese Maßnahme ist in vorteilhafter Weise durch eine räumliche Variation des elektrischen Widerstands der Heizschicht eine weitere Homogenisierung des Stromflusses im Bereich einer Krümmung des Strompfads an den freien Zonenenden ermöglicht.

Am Beginn der Übergangszone beträgt die elektrische Leitfähigkeit Null. Das Ende der Übergangszone ist durch den Bereich gegeben, in dem die zunehmende elektrische Leitfähigkeit die volle elektrische Leitfähigkeit der Heizschicht erlangt hat. Die der freien Trennzone zugeordneten zweiten Trennzonen sind im Bereich der Übergangszone verteilt angeordnet. Das vom freien Zonenende abgewandte Ende der am weitesten vom freien Zonenende entfernten zweiten Trennzone befindet sich am Ende der Übergangszone.

Bei einer vorteilhaften Ausgestaltung sind die Übergangszonen so ausgebildet, dass eine Schichtdicke der Heizschicht variiert. Hierbei nimmt die Schichtdicke der Heizschicht hin zum freien Zonenende ab bzw. weg vom freien Zonenende zu. Der Beginn der Übergangszone ist durch das freie Zonenende definiert, an dem die Schichtdicke der Heizschicht Null ist. Das Ende der Übergangszone ist definiert durch Erreichen der vollen Schichtdicke der Heizschicht. Vorzugsweise, jedoch nicht zwingend, ist die Übergangszone so ausgebildet, dass die Schichtdicke der Heizschicht zum freien Zonenende hin kontinuierlich, insbesondere linear, abnimmt.

Bei einer weiteren vorteilhaften Ausgestaltung nimmt eine Porosität der Heizschicht zum freien Zonenende hin zu, so dass in entsprechender Weise eine Abnahme der elektrischen Leitfähigkeit erreicht werden kann.

Bei einer weiteren vorteilhaften Ausgestaltung, bei der die Heizschicht einen Dotierstoff zur Erhöhung der elektrischen Leitfähigkeit aufweist, sind die Übergangszonen so ausgebildet, dass eine Konzentration des Dotierstoffs in der Übergangszone zum freien Zonenende hin abnimmt, so dass in entsprechender Weise eine Abnahme der elektrischen Leitfähigkeit erreicht werden kann.

Bei einer weiteren vorteilhaften Ausgestaltung, bei der die Heizschicht einen Dotierstoff zur Verminderung der elektrischen Leitfähigkeit aufweist, sind die Übergangszonen so ausgebildet, dass eine Konzentration des Dotierstoffs in der Übergangszone zum freien Zonenende hin zunimmt, so dass in entsprechender Weise eine Abnahme der elektrischen Leitfähigkeit erreicht werden kann.

Bei einer vorteilhaften Ausführungsform weist die Übergangszone an einem freien Zonenende eine Länge auf, die wenigstens der Hälfte einer sich senkrecht zu dessen Erstreckung sich bemessenden Breite des Strompfads am freien Zonenende entspricht, wodurch eine besonders gute Homogenisierung des Stromflusses erreicht werden kann.

Ferner erstreckt sich die Erfindung auf einen Flächenheizkörper mit zumindest einem Substrat mit einer Substratfläche auf die eine wie oben beschriebene Kunststoff-Folie zur Beheizung des Substrats aufgebracht ist. Bei dem Flächenheizkörper kann es sich insbesondere um eine Verbundscheibe handeln, bei der zwei Einzelscheiben durch eine Klebschicht miteinander verbunden sind.

Weiterhin erstreckt sich die Erfindung auf ein Verfahren zur Herstellung eines wie oben beschrieben ausgebildeten, elektrisch beheizbaren Trägers, insbesondere eine Kunststoff-Folie, mit den folgenden Schritten:
- Bereitstellen des Trägers, bei dem auf zumindest auf einen Teil einer Folienfläche eine elektrische Heizschicht aufgebracht ist und der über mindestens zwei zum Anschluss an eine Spannungsquelle vorgesehene Elektroden verfügt, die mit der Heizschicht so verbunden sind, dass zwischen den Elektroden ein Strompfad für einen Heizstrom geformt ist;
- elektrisches Unterteilen der Heizschicht durch eine oder mehrere erste Trennzonen, welche jeweils über mindestens ein freies Zonenende verfügen und so ausgebildet sind, dass der Strompfad an den freien Zonenenden seine Verlaufsrichtung ändert, und;
- elektrisches Unterteilen der Heizschicht durch eine oder mehrere zweite Trennzonen, die so ausgebildet sind, dass der an den freien Zonenenden seine Verlaufsrichtung ändernde Strompfad zumindest abschnittsweise in eine Mehrzahl elektrisch paralleler Teilstrompfade aufgeteilt wird, wobei wenigstens einem freien Zonenende einer geradlinigen ersten Trennzone eine oder mehrere zweite Trennzonen zugeordnet sind, wobei die zweiten Trennzonen in fluchtender Verlängerung zur ersten Trennzone angeordnet sind.

Ferner erstreckt sich die Erfindung auf die Verwendung eines wie oben beschriebenen Trägers zur elektrischen Beheizung eines funktionalen Einzelstücks und eines Einbauteils in Möbeln, Geräten und Gebäuden, insbesondere zur elektrischen Beheizung von Heizkörpern in Wohnräumen, beispielsweise als wandmontierbarer oder frei stehender Heizkörper, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

Es versteht sich, dass die verschiedenen Ausgestaltungen der Erfindung einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

### Kurze Beschreibung der Zeichnungen

Die Erfindung wird nun anhand von Ausführungsbeispielen näher erläutert, wobei Bezug auf die beigefügten Figuren genommen wird. Es zeigen in vereinfachter, nicht maßstäblicher Darstellung:
- Fig. 1: eine erfindungsgemäße Kunststoff-Folie mit ersten und zweiten Trennzonen in Aufsicht;
- Fig. 2: die Kunststoff-Folie von Fig. 1 mit zusätzlichen Übergangszonen in Aufsicht und in Querschnittsdarstellung;
- Fig. 3A-3B: die Kunststoff-Folie von Fig. 2 mit eingezeichnetem Strompfad in Aufsicht (Fig. 3A) sowie eine herkömmliche Kunststoff-Folie ohne Übergangszonen (Fig. 3B);
- Fig. 4: eine herkömmliche Kunststoff-Folie mit Darstellung lokaler Wärmezentren in Aufsicht.

### Ausführliche Beschreibung der Zeichnungen

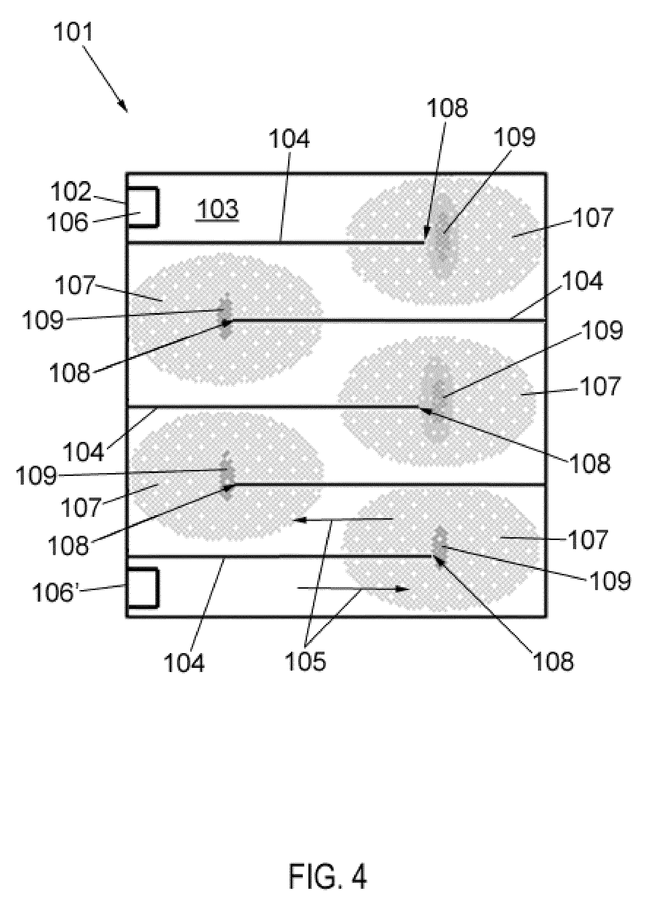

Sei zunächst Fig. 4 betrachtet, worin eine insgesamt mit der Bezugszahl 101 bezeichnete Kunststoff-Folie gemäß dem Stand der Technik gezeigt ist. Die Kunststoff-Folie 101 umfasst eine Folienfläche 102, auf die eine elektrische Heizschicht 103 aufgebracht ist. Die Heizschicht 103 ist durch geradlinige Trennzonen 104 elektrisch unterbrochen, so dass eine zusammenhängende mäander- bzw. S-förmige Struktur gebildet wird, welche an ihren beiden Enden mit den beiden Anschlusselektroden 106, 106' elektrisch verbunden ist. Zwischen den beiden Anschlusselektroden 106, 106' wird ein gewundener Strompfad 105 für einen an den Anschlusselektroden 106, 106' eingespeisten Heizstrom gebildet, durch den die Heizschicht 103 erwärmt wird. Die Trennzonen 104 verfügen jeweils über ein freies Zonenende 108 in der Heizschicht 103.

In Änderungszonen 107, in denen jeweils ein frei endendes Zonenende 108 einer Trennzone 104 enthalten ist, kehrt der Heizstrom mehrmals seine Verlaufsrichtung um 180° um. In den Änderungszonen 107 hat der Strompfad 105 demnach einen gekrümmten Verlauf, wodurch eine ungleichmäßige Stromdichteverteilung mit einer Konzentrierung des Stromflusses an den Zonenenden 108 resultiert. Dies führt typischer Weise zum Auftreten lokal überhitzter Stellen bzw. Hot Spots 109 an den Zonenenden 108.

Die vorliegende Erfindung löst dieses Problem, indem sie die Verteilung des Stromflusses in den Bereichen einer Krümmung des Strompfades homogenisiert, so dass eine Konzentration des Stromflusses an den Umkehrstellen des Strompfades zumindest weitgehend vermieden wird. Dies wird im Weiteren näher erläutert.

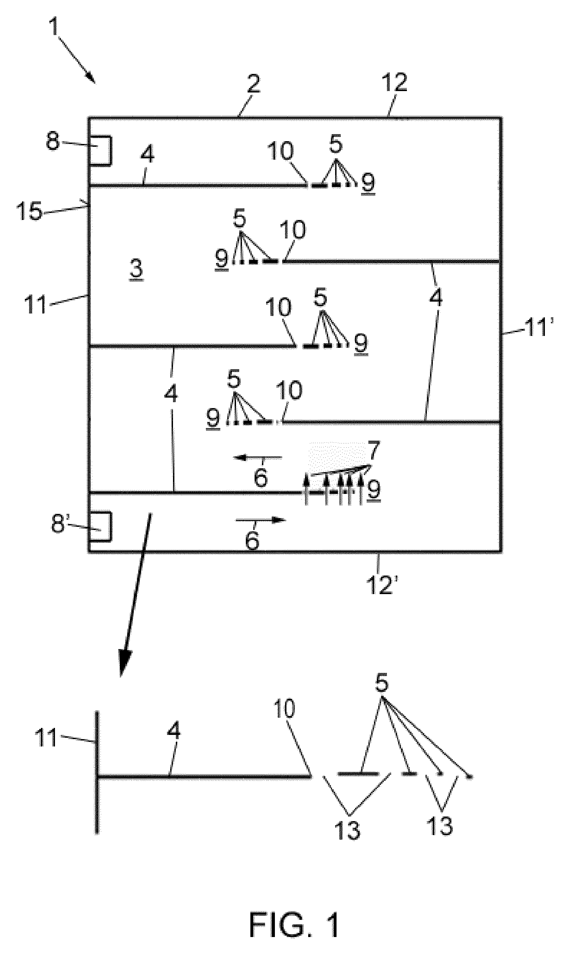

Sei zunächst Fig. 1 betrachtet, worin eine Ausführungsform einer insgesamt mit der Bezugszahl 1 bezeichneten, erfindungsgemäßen Kunststoff-Folie gezeigt ist. Fig. 1 zeigt die Kunststoff-Folie 1 in einer Gesamtdarstellung (oben), sowie einen vergrößerten Ausschnitt (unten) hiervon.

Demnach umfasst die Kunststoff-Folie 1 eine Folienfläche 2, auf die eine elektrisch leitende Heizschicht 3 im Wesentlichen vollflächig aufgebracht ist. Als Material für die Kunststoff-Folie 1 wird ein Kunststoff, hier beispielsweise PET eingesetzt. Allgemein kann für die Folie 1 jedes Material mit ausreichender chemischer Beständigkeit, geeigneter Form- und Größenstabilität, sowie gegebenenfalls hinreichender optischer Transparenz verwendet werden.

Die Heizschicht 3 enthält ein elektrisch leitfähiges Material. Im Allgemeinen ist die Wahl der Heizschicht 3 nicht auf ein bestimmtes Material beschränkt, solange durch dieses Material eine flächige, elektrische Heizung realisiert werden kann. Beispiele hierfür sind Metalle mit einer hohen elektrischen Leitfähigkeit wie Titan, Mangan, Indium, Chrom, Silber, Kupfer, Gold, Aluminium oder Molybdän, Metall-Legierungen wie mit Palladium legiertes Silber, sowie transparente, leitfähige Oxide (TCO = Transparent Conductive Oxides). Bei TCO handelt es sich vorzugsweise um Indiumzinnoxid, fluordotiertes Zinndioxid, aluminiumdotierts Zinndioxid, galliumdotiertes Zinndioxid, bordotiertes Zinndioxid, Zinnzinkoxid oder antimondotiertes Zinnoxid. Die Heizschicht 3 kann aus einer leitfähigen Einzelschicht oder einem Schichtenaufbau, der zumindest eine leitfähige Teilschicht enthält, bestehen. Beispielsweise umfasst ein solcher Schichtenaufbau mindestens eine leitfähige Teilschicht, vorzugsweise Silber (Ag), und weitere Teilschichten wie Entspiegelungs- und Blockerschichten. Die Schichtdicke der Heizschicht 3 kann breit variieren, wobei die Schichtdicke an jeder Stelle beispielsweise im Bereich von 0,1 nm bis 100 µm liegt. Im Falle von TCO liegt die Schichtdicke beispielsweise im Bereich von 100 nm bis 1,5 µm, bevorzugt im Bereich von 150 nm bis 1 µm und stärker bevorzugt im Bereich von 200 nm bis 500 nm. Beispielsweise liegt die Schichtdicke einer Titanschicht im Bereich von 0,1 bis 2 nm, die Schichtdicke einer Manganschicht im Bereich von 0,1 bis 1 nm, die Schichtdicke einer Molybdänschicht im Bereich von 0,1 bis 1 nm, die Schichtdicke einer Silberschicht im Bereich von 1 bis 50 nm, die Schichtdicke einer Indiumschicht im Bereich von 50 bis 200 nm, die Schichtdicke einer Goldschicht im Bereich von 1 bis 10 nm und die Schichtdicke einer Chromschicht beträgt beispielsweise ca. 1 nm. Der Schichtwiderstand der Heizschicht 3 ist beispielsweise geringer als 20 Ohm und liegt insbesondere im Bereich von 0,1 bis 20 Ohm. Im gezeigten Ausführungsbeispiel liegt der Schichtwiderstand der Heizschicht 3 beispielsweise im Bereich von 3 bis 7 Ohm.

Die Heizschicht 3 ist aus der Gasphase auf der Kunststoff-Folie 1 abgeschieden, zu welchem Zweck an sich bekannte Verfahren wie chemische Gasphasenabscheidung (CVD = Chemical Vapor Deposition) oder physikalische Gasphasenabscheidung (PVD = Physical Vapor Deposition) eingesetzt werden können. Vorzugsweise wird die Heizschicht 3 durch Sputtern (Magnetron-Kathodenzerstäubung) auf der Kunststoff-Folie 1 abgeschieden.

Dient die Kunststoff-Folie 1 zur Beheizung einer Fahrzeugscheibe, insbesondere einer Windschutzscheibe, muss sie hinreichend transparent für sichtbares Licht im Wellenlängenbereich von 350 nm bis 800 nm sein, wobei unter dem Begriff "Transparenz" eine hohe Lichtdurchlässigkeit von beispielsweise mehr als 80% zu verstehen ist. Dies kann insbesondere durch Herstellung aus PET und eine transparente Heizschicht 3 aus Silber (Ag) erreicht werden.

Die Kunststoff-Folie 1 ist hier beispielsweise in Quaderform ausgebildet, wobei sie über zwei gegenüberliegende erste Folienränder 11, 11' (hier beispielsweise die längeren Folienränder) und zwei gegenüberliegende zweite Folienränder 12, 12' (hier beispielsweise die kürzeren Folienränder) verfügt. Es versteht sich, dass die Kunststoff-Folie 1 jede andere für die jeweilige Anwendung geeignete Form haben kann.

Wie in Fig. 1 gezeigt, ist die Heizschicht 3 durch eine Mehrzahl geradliniger Trennzonen 4, 5 elektrisch unterteilt, wobei ein zusammenhängender mäander- bzw. S-förmiger Hauptstrompfad 6 zwischen zwei Anschlusselektroden 8, 8' von der Heizschicht 3 gebildet wird. Durch Einspeisen eines Heizstroms an den Anschlusselektroden 8, 8' kann die Heizschicht 3 erwärmt werden. Die beiden Anschlusselektroden 8, 8' bestehen hier beispielsweise aus einem gleichen metallischen Material, beispielsweise Kupfer oder Aluminium. Die Anschlusselektroden 8, 8' können über (nicht dargestellte) Anschlussleiter mit den beiden Polen einer Spannungsquelle, beispielsweise eine Batterie bzw. Akkumulator, insbesondere eine Fahrzeug-Batterie, zum Bereitstellen einer Speisespannung verbunden werden. Die Spannungsquelle kann beispielsweise eine Speisespannung von 12 bis 24 V, entsprechend einer typischen Bordspannung in brennkraftgetriebenen Kraftfahrzeugen, oder von mehr als 40 V, entsprechend einer typischen Bordspannung in Elektrofahrzeugen bereitstellen. Insbesondere kann die Heizschicht 3 mit einer Spannung im Bereich von 42 bis 400 Volt geheizt werden. Bei einem Flächenheizkörper 1 zur Heizung im Innen- oder Außenbereich eines Gebäudes kann es sich bei der Spannungsquelle insbesondere um eine zentrale Spannungsversorgung mit einer Netzspannung von beispielsweise 110 bis 220 Volt handeln.

In der Kunststoff-Folie 1 sind die Trennzonen 4, 5 durch Entfernen des Materials der Heizschicht 3 hergestellt, wobei sich beispielsweise V- oder U-förmige Kanäle bzw. Ausnehmungen im Material der Heizschicht 3 ergeben. Diese Kanäle können zusätzlich mit einem elektrisch isolierenden Material verfüllt sein. Das Entfernen der Heizschicht 3 zum Bilden der Trennzonen 4, 5 kann beispielsweise auf mechanische Weise erfolgen, etwa durch Einritzen oder Abschleifen. Erfindungsgemäß bevorzugt ist das Entfernen mithilfe eines Laserstrahls, der das Material der Heizschicht 3 in den Trennzonen 4, 5 entfernt.

Im Sinne vorliegender Erfindung ist unter dem Begriff "Trennzone" allgemein jeder Bereich der Heizschicht 3 zu verstehen, der geeignet ist, zwei angrenzende Gebiete der Heizschicht 3 elektrisch voneinander zu trennen, so dass ein Stromfluss über die Trennzone verhindert wird. Dazu weist die Trennzone beispielsweise einen elektrischen Widerstand von mehr als 1 MΩ auf.

Die Heizschicht 3 verfügt über geradlinige erste Trennzonen 4 mit paralleler Anordnung. Die ersten Trennzonen 4 erstrecken sich abwechselnd von dem einen ersten Folienrand 11 bzw. 11' hin zum gegenüberliegenden ersten Folienrand 11' bzw. 11, wobei sie jeweils mit einem Zonenende 10 innerhalb der Heizschicht 3 frei enden, ohne den gegenüberliegenden ersten Folienrand zu erreichen. Hierdurch wird ein mäander- bzw. S-förmiger Hauptstrompfad 6 in der Heizschicht 3 gebildet. Im Allgemeinen ist als Zonenende 10 jede Kante oder Ecke einer ersten Trennzone 10 zu verstehen, die in den Flächenbereich der Heizschicht 3 hereinragt und bewirkt, dass der Hauptstrompfad 6 innerhalb der Heizschicht 3 seine Verlaufsrichtung ändert. Anders ausgedrückt, stellen die Zonenenden 10 jeweils Umkehrpunkte dar, an denen der Heizstrom seine Verlaufsrichtung ändert, hier beispielsweise um 180°.

In der in Fig. 1 gezeigten Ausführungsform sind in fluchtender Verlängerung der ersten Trennzonen 4 jeweils geradlinige zweite Trennzonen 5 angeordnet, die zur Unterbrechung des Stromflusses in diesen Bereichen dienen. Im Ausführungsbeispiel sind beispielhaft jeweils vier zweite Trennzonen 5 demselben Zonenende 10 einer ersten Trennzone 4 zugeordnet. Zwischen den Trennzonen 4, 5 befindet sich jeweils Material der Heizschicht 3, so dass eine Mehrzahl (hier z.B. vier) Durchgangsöffnungen 13 für den Heizstrom geformt werden. Dies hat zur Folge, dass der Hauptstrompfad 6 im Bereich eines jeden Zonenendes 10 in eine Mehrzahl (hier fünf) Teilstrompfade 7 aufgeteilt wird, wobei der Heizstrom durch die Teilstrompfade 7 zumindest abschnittsweise um die freien Zonenenden 10 herum geführt wird. Durch die Zerlegung des Hauptstrompfads 6 in mehrere Teilstrompfade 7 wird der Effekt erzielt, dass der Heizstrom an den Zonenenden 10 im Vergleich zur herkömmlichen Kunststoff-Folie 101 von Fig. 9 über eine größere Fläche der Heizschicht 3 verteilt wird. Dabei kann insbesondere eine lokale Konzentration der Stromdichte vermieden werden, so dass der Stromfluss in der Heizschicht 3 homogenisiert und das Auftreten von lokalen Erwärmungen (Hot Spots) verhindert wird. In dem gezeigten Ausführungsbeispiel sind die zweiten Trennzonen 5 umso kürzer ausgebildet, je weiter entfernt diese vom freien Zonenende 10 sind. Dabei nimmt die in fluchtender Verlängerung der ersten Trennzone 4 sich bemessende Breite der Durchgangsöffnungen 13 in Richtung zum Zonenende 10 hin ab, wodurch eine besonders gute Homogenisierung der Stromdichteverteilung erzielt werden kann. Die ersten und zweiten Trennzonen 4, 5 können in besonders einfacher und kostengünstiger Weise in der industriellen Serienfertigung hergestellt werden, wobei zu diesem Zweck einer Laserkopf geradlinig über die Heizschicht 3 geführt und zum Erzeugen einer Trennzone 4,5 zeitweilig eingeschaltet wird.

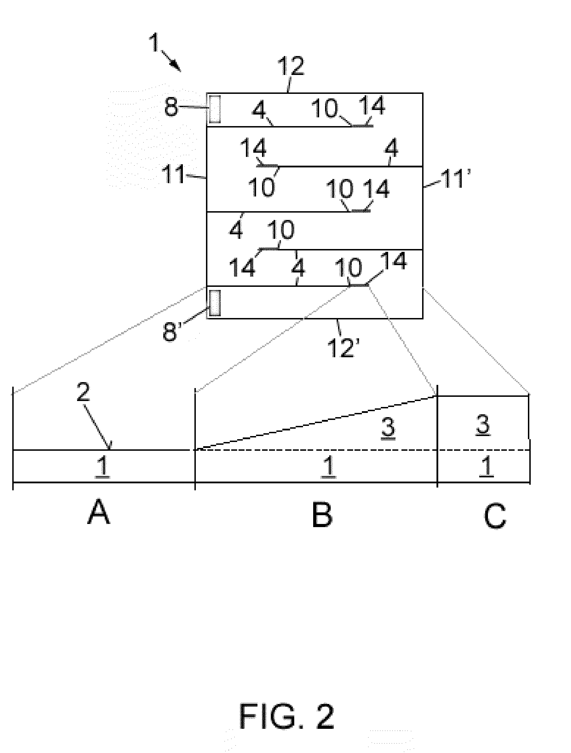

Fig. 2 zeigt eine weitere Ausgestaltung der Kunststoff-Folie 1 von Fig. 1. Um unnötige Wiederholungen zu vermeiden, werden lediglich die Unterschiede zum Ausführungsbeispiel von Fig. 1 erläutert und ansonsten wird auf die dort gemachten Ausführungen Bezug genommen.

Demnach ist an den freien Zonenenden 10 jeweils eine geradlinige Übergangszone 14 in fluchtender Verlängerung zur geradlinigen ersten Trennzone 4 angeordnet, wobei sich die Übergangszone 14 der ersten Trennzone 4 unmittelbar anschließt. Denkbar ist aber auch, dass die Übergangszonen 14 jeweils eine andere Ausrichtung und Anordnung relativ zur zugeordneten ersten Trennzone 4 haben. Die Übergangszonen 14 werden jeweils durch Vermindern der Schichtdicke der Heizschicht 3 in Richtung zum Zonenende 10 ausgebildet. Durch die Verminderung der Schichtdicke der Heizschicht 3 wird die Leitfähigkeit der Heizschicht 3 lokal herabgesetzt und somit deren elektrischer Widerstand erhöht.

Wie anhand der vergrößerten Querschnittsdarstellung von Fig. 2 (Schnitt durch die Kunststoff-Folie 1 entlang einer ersten Trennzone 4 und Übergangszone 14) ersichtlich ist, nimmt die Schichtdicke der Heizschicht 3 in der Übergangszone 14 ausgehend vom Zonenende 10 linear zu bis die Schichtdicke der Heizschicht 3 außerhalb der ersten Trennzone 4 erreicht ist. Hierdurch ändert sich die elektrische Leitfähigkeit in der Übergangszone 14 in entsprechender Weise, d.h. sie nimmt zum Zonenende 10 hin ab. Wie angegeben, befindet sich im Bereich der ersten Trennzone 4 (Bereich A) keine Heizschicht 3 auf dem Substrat 2, so dass eine elektrische Verbindung ausgeschlossen ist. Im Bereich der Übergangszone 14 (Bereich B) wächst die Schichtdicke der Heizschicht 3 beginnend vom freien Zonenende 10 der ersten Trennzone 4 kontinuierlich und linear an, wobei sich die Leitfähigkeit der Übergangszone 14 mit zunehmendem Abstand vom freien Zonenende 10 erhöht. In der Heizschicht 3 (Bereich C) liegt eine zumindest annähernd konstante Schichtdicke vor. Da eine Verminderung der elektrischen Leitfähigkeit dazu führt, dass ein Teil des Stroms in einen Bereich höherer Leitfähigkeit verlagert wird, kann zur Vermeidung von Hot Spots eine Homogenisierung des Stromflusses am Zonenende 10 erzielt werden.

Eine Variation der Schichtdicke der Heizschicht 3 in den Übergangszonen 14 kann beispielsweise durch selektives Entfernen vorzugsweise mithilfe eines Lasers erfolgen, wobei je nach gewählter Energiedichte des Laserpunkts auf der Heizschicht 3 eine bestimmte Menge an Material der Heizschicht abgetragen wird. Alternativ können jedoch auch andere Laserparameter geeignet angepasst werden, wie beispielsweise Leistung, Frequenz, Pulslänge, Laserstrahlform oder Wiederholrate. Geeignete Wellenlängen des Lasers können beispielsweise 355 nm, 532 nm oder 1064 nm betragen. Darüber hinaus ist es bei Verwendung eines steuerbaren und beweglichen Laserkopfes möglich, eine unterschiedliche Abtragung durch Anpassen der Bewegung des Laserpunkts zu erreichen, beispielsweise durch Verändern der Geschwindigkeit oder der Beschleunigung des Laserpunkts. Um eine gewünschte Abtragtiefe der Heizschicht 3 zu erreichen, können die oben genannten Verfahren beliebig kombiniert werden. Die Wahl der Parameter und des verwendeten Lasers hängt dabei von dem zu strukturierenden Material der Heizschicht 3 ab. Grundsätzlich können zum Abtragen der Heizschicht 3 und Herstellen eines Schichtdickengradienten auch andere Verfahren verwendet werden, beispielsweise mechanische oder chemische Verfahren. Ein chemisches Verfahren zum Abtragen der Heizschicht 3 könnte beispielsweise einen Ätzschritt aufweisen.

Vorteilhaft hat die Übergangszone 14 eine in fluchtender Verlängerung der ersten Trennzone 4 sich bemessende Länge, die mindestens der doppelten Breite des Hauptstrompfads 6 entspricht, wodurch erreicht werden kann, dass im Bereich der Übergangszone 14 eine besonders gleichmäßige Stromverteilung vorliegt und dem Entstehen von Hot Spots zuverlässig und sicher entgegen gewirkt werden kann.

Statt durch eine Verminderung der Schichtdicke der Heizschicht 3 kann die Übergangszone 14 im Allgemeinen durch alle geeigneten Maßnahmen gebildet werden, die in der Lage sind, die elektrische Leitfähigkeit der Heizschicht 3 im Bereich des freien Zonenendes 10 in gewünschter Weise zu verändern, so beispielsweise durch Verändern der Porosität der Heizschicht 3 oder Hinzufügen von Verunreinigungen oder Dotierstoffen zur Heizschicht 3.
In den Übergangszonen 14 sind die zweiten Trennzonen 5 jeweils verteilt angeordnet, was in Fig. 2 nicht näher dargestellt ist. Hierbei befindet sich das vom freien Zonenende 10 abgewandte Ende der am weitesten vom freien Zonenende 10 entfernten zweiten Trennzone 5 am Ende der Übergangszone 14. Insgesamt kann durch die Kombination von zweiten Trennzonen 5 und Übergangszonen 14 eine noch bessere Homogenisierung des Stromflusses um die freien Zonenenden 10 erreicht werden.

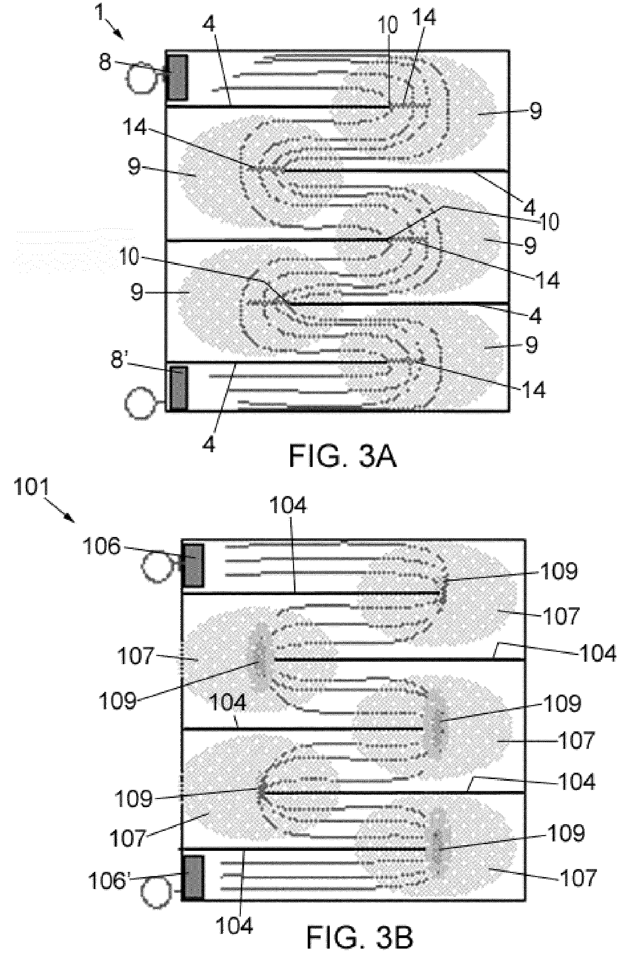

Fig. 3A zeigt die Ausführungsform von Fig. 2, wobei der Hauptstrompfad 6 anhand von Stromlinien dargestellt ist. Demnach wird im Bereich einer Krümmung des Hauptstrompfads 6 durch eine Änderung der elektrischen Leitfähigkeit in den Übergangszonen 14 verhindert, dass sich der Stromfluss an den freien Zonenenden 10 konzentriert, wodurch dem Auftreten von Hot Spots entgegen gewirkt werden kann. Im Vergleich hierzu verdeutlicht Fig. 3B eine entsprechende Situation in der herkömmlichen Kunststoff-Folie 101 von Fig. 4. Demnach konzentriert sich der Stromfluss im Bereich der freien Zonenenden 10 der Trennzonen 104, wodurch sich die Temperatur in diesen Bereichen stark erhöht, mit der Folge einer ungleichmäßigen Wärmeverteilung in der Kunststoff-Folie 101 und dem Auftreten von Hot Spots 109.

### Bezugszeichenliste

- 1': Kunststoff Folie
- 2: Folienfläche
- 3: Heizschicht
- 4: erste Trennzone
- 5: zweite Trennzone
- 6: Hauptstrompfad
- 7: Teilstrompfad
- 8, 8': Anschlusselektrode
- 9: Änderungszone
- 10: Zonenende
- 11, 11': erster Folienrand
- 12, 12': zweiter Folienrand
- 13: Durchgangsöffnung
- 14: Übergangszone

- 101: Kunststoff-Folie
- 102: Folienfläche
- 103: Heizschicht
- 104: Trennzone
- 105: Strompfad
- 106, 106': Anschlusselektrode
- 107: Änderungszone
- 108: Zonenende
- 109: Hot Spot

## Patentansprüche

1. Träger (1) für Flächenheizkörper, mit einer zumindest auf einen Teil einer Trägerfläche (2) aufgebrachten elektrischen Heizschicht (3) und mit mindestens zwei zum Anschluss an eine Spannungsquelle vorgesehene Elektroden (8, 8'), die mit der Heizschicht (3) so verbunden sind, dass zwischen den Elektroden ein Strompfad (6) für einen Heizstrom geformt ist, wobei die Heizschicht (3) elektrisch unterteilt ist durch:
- eine oder mehrere erste Trennzonen (4), welche jeweils über mindestens ein freies Zonenende (10) verfügen und so ausgebildet sind, dass der Strompfad (6) an den freien Zonenenden (10) seine Verlaufsrichtung ändert, und
- eine oder mehrere zweite Trennzonen (5), die so ausgebildet sind, dass der an den freien Zonenenden (10) seine Verlaufsrichtung ändernde Strompfad (6) zumindest abschnittsweise in eine Mehrzahl elektrisch paralleler Teilstrompfade (7) aufgeteilt wird,
wobei wenigstens einem freien Zonenende (10) einer ersten Trennzone (4) eine oder mehrere zweite Trennzonen (5) zugeordnet sind, wobei die zweiten Trennzonen (5) in fluchtender Verlängerung zur ersten Trennzone (4) angeordnet sind.

2. Träger (1) nach Anspruch 1, bei welchem die Trennzonen (4, 5) einen Zwischenabstand haben, der sich zum freien Zonenende (10) hin verkleinert.

3. Träger (1) nach Anspruch 1 oder 2, bei welchem die dem freien Zonenende (10) zugeordneten zweiten Trennzonen (5) so ausgebildet sind, dass die Teilstrompfade (7) am freien Zonenende (10) einen zumindest annähernd gleichen elektrischen Widerstand haben.

4. Träger (1) nach einem der Ansprüche 1 bis 3, bei welchem sich an das freie Zonenende (10) der zumindest einen ersten Trennzone (4), welcher eine oder mehrere zweite Trennzonen (5) zugeordnet sind, eine Übergangszone (14) anschließt, in der die elektrische Leitfähigkeit der Heizschicht (3) zum freien Zonenende (10) hin abnimmt.

5. Träger (1) nach Anspruch 4, bei welchem in der Übergangszone (14) eine Schichtdicke der Heizschicht (3) zum freien Zonenende (10) hin abnimmt

6. Träger (1) nach Anspruch 4 oder 5, bei welchem in der Übergangszone (14) eine Porosität der Heizschicht (3) zum freien Zonenende (10) hin zunimmt.

7. Träger (1) nach einem der Ansprüche 4 bis 6, bei welchem die Heizschicht (3) einen Dotierstoff zur Erhöhung der elektrischen Leitfähigkeit aufweist, wobei eine Konzentration des Dotierstoffs in der Übergangszone (14) zum freien Zonenende (10) hin abnimmt.

8. Träger (1) nach einem der Ansprüche 4 bis 6, bei welchem die Heizschicht (3) einen Dotierstoff zur Verminderung der elektrischen Leitfähigkeit aufweist, wobei eine Konzentration des Dotierstoffs in der Übergangszone (14) zum freien Zonenende (10) hin zunimmt.

9. Flächenheizkörper, mit zumindest einem Substrat mit einer Substratfläche auf die ein Träger (1), insbesondere eine Kunststoff-Folie, nach einem der Ansprüche 1 bis 8 aufgebracht ist.

10. Verfahren zur Herstellung eines elektrisch beheizbaren Trägers (1), insbesondere Kunststoff-Folie, mit den folgenden Schritten:
- Bereitstellen des Trägers (1), bei dem auf zumindest einen Teil einer Folienfläche (2) eine elektrische Heizschicht (3) aufgebracht ist und der über mindestens zwei zum Anschluss an eine Spannungsquelle vorgesehene Elektroden (8, 8') verfügt, die mit der Heizschicht (3) so verbunden sind, dass zwischen den Elektroden ein Strompfad (6) für einen Heizstrom geformt ist;
- elektrisches Unterteilen der Heizschicht (3) durch eine oder mehrere erste Trennzonen (4), welche jeweils über mindestens ein freies Zonenende (10) verfügen und so ausgebildet sind, dass der Strompfad (6) an den freien Zonenenden (10) seine Verlaufsrichtung ändert, und;
- elektrisches Unterteilen der Heizschicht (3) durch eine oder mehrere zweite Trennzonen (5), die so ausgebildet sind, dass der an den freien Zonenenden (10) seine Verlaufsrichtung ändernde Strompfad (6) zumindest abschnittsweise in eine Mehrzahl elektrisch paralleler Teilstrompfade (7) aufgeteilt wird, wobei wenigstens einem freien Zonenende (10) einer ersten Trennzone (4) eine oder mehrere zweite Trennzonen (5) zugeordnet sind, wobei die zweiten Trennzonen (5) in fluchtender Verlängerung zur ersten Trennzone (4) angeordnet sind.

11. Verwendung eines Trägers (1), insbesondere eine Kunststoff-Folie, nach einem der Ansprüche 1 bis 8 zur elektrischen Beheizung eines funktionalen Einzelstücks und eines Einbauteils in Möbeln, Geräten und Gebäuden, insbesondere zur elektrischen Beheizung von Heizkörpern in Wohnräumen, beispielsweise als wandmontierbarer oder frei stehender Heizkörper, sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach.

## Claims

1. Carrier (1) for panel heating elements with an electrical heating layer (3) applied to at least a part of a carrier surface (2) and with at least two electrodes (8, 8') provided for connection to a voltage source, which electrodes are connected to the heating layer (3) such that a current path (6) for a heating current is formed between the electrodes, wherein the heating layer (3) is electrically divided by:
- one or a plurality of first separating zones (4), which have, in each case, at least one free zone end (10), and are implemented such that the current path (6) changes its direction of flow on the free zone ends (10), and
- one or a plurality of second separating zones (5), which are implemented such that the current path (6) changing its direction of flow on the free zone ends (10) is divided at least in sections into a plurality of electrically parallel current subpaths (7),
wherein one or a plurality of second separating zones (5) are associated with at least one free zone end (10) of a first separating zone (4), wherein the second separating zones (5) are arranged in an aligned extension of the first separating zone (4).

2. Carrier (1) according to claim 1, wherein the separating zones (4, 5) have a distance between them that becomes smaller toward the free zone end (10).

3. Carrier (1) according to claim 1 or 2, wherein the second separating zones (5) associated with the free zone end (10) are implemented such that the current subpaths (7) have, on the free zone end (10), an at least approx. equal electrical resistance.

4. Carrier (1) according to one of claims 1 through 3, wherein a transition zone (14), in which the electrical conductivity of the heating layer (3) decreases toward the free zone end (10), adjoins the free zone end (10) of the at least one first separating zone (4), with which one or a plurality of second separating zones (5) are associated.

5. Carrier (1) according to claim 4, wherein in the transition zone (14), a layer thickness of the heating layer (3) decreases toward the free zone end (10).

6. Carrier (1) according to claim 4 or 5, wherein in the transition zone (14), a porosity of the heating layer (3) increases toward the free zone end (10).

7. Carrier (1) according to one of claims 4 through 6, wherein the heating layer (3) has a dopant to increase the electrical conductivity, with a concentration of the dopant in the transition zone (14) decreasing toward the free zone end (10).

8. Carrier (1) according to one of claims 4 through 6, wherein the heating layer (3) has a dopant to reduce the electrical conductivity, with a concentration of the dopant in the transition zone (14) increasing toward the free zone end (10).

9. Panel heating element, with at least one substrate with a substrate surface on which a carrier (1), in particular a plastic film, according to one of claims 1 through 8 is applied.

10. Method for producing an electrically heatable carrier (1), in particular plastic film, with the following steps:
- providing the carrier (1), on which an electrical heating layer (3) is applied on at least a part of a film surface (2) and which has at least two electrodes (8, 8') provided for connection to a voltage source, which electrodes are connected to the heating layer (3) such that a current path (6) for a heating current is formed between the electrodes;
- electrically dividing the heating layer (3) by one or a plurality of first separating zones (4), with the separating zones (4) having, in each case, at least one free zone end (10) and being implemented such that the current path (6) changes its direction of flow at the free zone ends (10), and;
- electrically dividing the heating layer (3) by one or a plurality of second separating zones (5), which are implemented such that the current path (6) changing its direction of flow on the free zone ends (10) is divided at least in sections into a plurality of electrically parallel current subpaths (7), wherein one or a plurality of second separating zones (5) are associated with at least one free zone end (10) of a first separating zone (4), with the second separating zones (5) arranged in an aligned extension of the first separating zone (4).

11. Use of a carrier (1), in particular a plastic film, according to one of claims 1 through 8 for the electrical heating of a functional individual piece and a built-in part in furniture, devices, and buildings, in particular for the electrical heating of heating elements in residential spaces, for example, as wall-mountable or freestanding heating elements, as well as in means of transportation for travel on land, in the air, or on water, in particular in motor vehicles, for example, as a windshield, rear window, side window, and/or glass roof.

## Revendications

1. Support (1) pour panneaux chauffant, avec une couche de chauffage électrique (3) appliquée sur au moins une partie d'une surface de support (2) et au moins deux électrodes prévues pour être raccordées à une source d'alimentation (8, 8'), qui sont raccordée avec la couche de chauffage (3) de telle manière qu'un trajet de courant (6) pour un courant de chauffage est formé entre les électrodes, où la couche de chauffage est électriquement subdivisée par :
- une ou plusieurs premières zones de séparation (4), qui disposent chacune d'au moins une extrémité de zone (10) libre et sont formées afin de modifier la direction du trajet de courant (6) au moins partiellement aux extrémités de zone (10) libres, et
- une ou plusieurs deuxièmes zones de séparation (5), qui sont conçues de telle manière que le trajet de courant (6) ayant modifié son cours est subdivisé au moins par sections en une pluralité de trajets de courant partiels (7) électriquement en parallèle,
où une ou plusieurs deuxièmes zones de séparation (5) sont associées à au moins une extrémité de zone libre (10) d'une première zone de séparation (4), où les deuxièmes zones de séparation (5) sont disposées en prolongation alignée par rapport à la première zone de séparation.

2. Support (1) selon la revendication 1, où les zones de séparation (4, 5) ont une distance intermédiaire qui diminue vers l'extrémité de zone (10) libre.

3. Support (1) selon l'une des revendications 1 ou 2, où les deuxièmes zones de séparation (5) associées à l'extrémité de zone (10) libre sont configurées de telle manière qu'à l'extrémité de zone (10) libre les trajets de courant partiels (7) ont au moins approximativement une même résistance électrique.

4. Support (1) selon l'une des revendications 1 à 3, où une zone de transition (14) s'attache à l'extrémité de zone (10) libre de ladite au moins une première zone de séparation (4) à laquelle sont associées au moins une ou plusieurs deuxièmes zones de séparation (5), dans laquelle la conductivité électrique de la couche de chauffage (3) diminue vers l'extrémité de zone (10) libre.

5. Support (1) selon la revendication 4, où dans la zone de transition (14), une épaisseur de la couche de chauffage (3) diminue vers l'extrémité de zone (10) libre.

6. Support (1) selon l'une des revendications 4 ou 5, où une porosité de la couche de chauffage (3) augmente vers l'extrémité de zone (10) libre dans la zone de transition (14).

7. Support (1) selon l'une des revendications 4 à 6, où la couche de chauffage (3) présente une substance dopante pour augmenter la conductivité électrique, où une concentration de la substance dopante diminue dans la zone de transition (14) vers l'extrémité de zone (10) libre.

8. Support (1) selon l'une des revendications 4 à 6, où la couche de chauffage (3) présente une substance dopante pour réduire la conductivité électrique, où une concentration de la substance dopante augmente dans la zone de transition (14) vers l'extrémité de zone (10) libre.

9. Panneau de chauffage avec au moins un substrat avec une surface de substrat sur laquelle un support (1) est appliquée, selon l'une des revendications 1 à 8, en particulier une feuille de plastique.

10. Procédé pour la fabrication d'un support pouvant être chauffé électriquement (1), en particulier en plastique, avec les étapes suivantes :
- fourniture du support (1) où une couche de chauffage électrique (3) est appliquée sur au moins une partie d'une surface d'une feuille (2) et qui dispose d'au moins deux électrodes conçues pour être raccordées à une source d'alimentation (8, 8'), qui sont reliées à la couche de chauffage (3), de telle manière qu'un trajet de courant (6) pour un courant de chauffage est formé entre les électrodes ;
- subdivision électrique de la couche de chauffage (3) par une ou plusieurs premières zones de séparation (4), qui disposent respectivement d'au moins une extrémité de zone libre (10) et sont formées de telle manière que la direction du trajet de courant (6) est modifiée aux extrémités de zone (10) libres, et ;
- subdivision électrique de la couche de chauffage (3) par une ou plusieurs deuxièmes zones de séparation (5), qui sont conçues de telle manière que le trajet de courant (6) ayant modifié son cours est subdivisé au moins par sections en une pluralité de trajets de courant partiels (7) électriquement en parallèle, ou une ou plusieurs deuxièmes zones de séparation (5) sont associées à au moins une extrémité de zone (10) libre d'une première zone de séparation (4), où les deuxièmes zones de séparation (5) sont disposées en prolongation alignée par rapport à la première zone de séparation (4).

11. Utilisation d'un support (1), en particulier un film plastique, selon l'une des revendications 1 à 8 pour le chauffage électrique d'une pièce fonctionnelle et d'un accessoire dans le mobilier, les équipements et les bâtiments, en particulier pour le chauffage électrique de radiateurs dans les logements, tels que des radiateurs fixés au mur ou autoportante et dans les moyens de transport pour la circulation sur la terre, dans l'air ou sur l'eau, en particulier dans des véhicules à moteur, par exemple comme pare-brise, lunette arrière, vitre latérale et/ou toit vitré.
